Europäisches Patentamt

European Patent Office

Office européen des brevets

(11) Publication number: **0 313 309**
**A2**

## (12) EUROPEAN PATENT APPLICATION

(21) Application number: 88309750.3

(22) Date of filing: 18.10.88

(30) Priority: 20.10.87 JP 265679/87
21.10.87 JP 266826/87
05.04.88 JP 82366/88

(43) Date of publication of application:
26.04.89 Bulletin 89/17

(84) Designated Contracting States:
CH DE FR GB IT LI NL SE

(51) Int. Cl.⁴: **H02K 17/36 , H02K 17/30**

(71) Applicant: **SATAKE ENGINEERING CO., LTD.**
**7-2, Sotokanda 4-chome**
**Chiyoda-ku Tokyo 101(JP)**

(72) Inventor: **Onogi, Yukio**
**16-18, Kami-nukushina 2-chome Higashi-ku**
**Hiroshima-shi Hiroshima-ken(JP)**
Inventor: **Satake, Toshihiko**
**2-38, Saijonishihonmachi**
**Higashihiroshima-shi**
**Hiroshima-ken(JP)**

(74) Representative: **Votier, Sidney David et al**
**CARPMAELS & RANSFORD 43, Bloomsbury**
**Square**
**London WC1A 2RA(GB)**

(54) **Variable speed controllable induction motor.**

㊐ In a variable speed controllable induction motor which has a unitary rotor (2) having a plurality of rotor cores (2A,2B) provided thereon with rotor conductive members (5) short-circuited by resistive members (r), a plurality of stators (25,26) surroundingly facing the respective rotor cores (2A,2B) and a phase shifter (60) producing phase differences between the voltages induced on separate portions of the conductive members (5), there are provided a phase difference detector (92) or rotated position detector (92A,92B,92C,92D), a rotations number detector (91), and a control device (70). The control device (70) calculates the necessary amount of operation of the phase shifter (60) for starting the motor or for effecting the speed changing operation thereof during the operation based on a phase difference detected by the phase difference detector (92) or the rotated position detector (92A,92B,92C,92D) and the actual number of revolutions of the rotor (2) detected by the rotations number detector (91), and, thus, the operation of the phase shifter (60) driven by a driving device (50) is automatically and quickly controlled until the actual number of revolutions reaches the desired number of revolutions set by a revolutions number setting device (94).

Fig.1

## Variable speed controllable induction motor

The present invention relates to a variable speed controllable induction motor by which speed control over a wide range can be easily effected and in which the torque characteristics and efficiency are excellent.

A squirrel-cage rotor type induction motor is widely used as a prime mover as it is simple in its construction, less costly, less susceptible to damage and, moreover, both the power factor and efficiency are good in operation of the motor. However, drawbacks of the squirrel-cage rotor type induction motor are that the starting characteristics thereof are not good, that is, a starting torque is not sufficiently satisfactory despite high current consumption at starting and that it is difficult to effect a wide range speed control with high efficiency.

In a wound rotor type induction motor in which a secondary resistor is inserted externally through brushes and slip-rings in the circuit of rotor windings, a continuous and efficient speed control can be effected comparatively simply by means of controlling the resistance values to thereby change the slip of the motor. However, in the squirrel-cage rotor type induction motor, the structure or configuration thereof does not permit such a method of control and, therefore, the methods generally adopted are as explained hereunder.

As methods of continuous control of speeds, one method is by way of varying a power source frequency and another is by changing a power source voltage. Both of these methods are generally not satisfactory and have drawbacks in that efficiency of the control is low at low speed ranges. Further, the former method requires a high cost frequency convertor which, in the course of converting frequencies, produces high harmonic noise and other electromagnetic waves which, if they flow into the commercial power lines, would cause the occurrence of various harmonic noise problems, causing malfunctioning of computers or other electronic devices, heating of power capacitors, etc.

Further, as a method of continuous control of speeds, it is known to arrange that two induction motor components of the same poles are axially disposed side by side and two stators having primary windings cause, by either mechanical or electrical means, a phase difference between the rotating magnetic fields generated around each of the two rotor cores of a single rotor provided on a rotary axis so that a speed control is effected by varying the phase difference thereby to change the amount of the combined secondary voltage, that is, to change the amount of the secondary current flowing in the conductive members of the rotor.

Also, there has been known a system in which several kinds of poles are provided in stator winding circuits of the motor and a speed control is performed by means of switching the poles during the operation. While this system enables a speed to be controlled step-wise or non-continuously, it is not possible to perform a stepless and smooth control of the speed by this system.

The applicant of the present application filed a U.S. Patent Application, U.S. Serial No. 055,147, on May 28, 1987. The invention covered therein relates to a variable speed controlled induction motor characterized by the combination of:

a rotor formed in one-piece having a plurality of rotor cores mounted, with a predetermined air space or a non-magnetic core portion being provided therebetween, on a common axis and having a plurality of conductive members interconnected and respectively mounted on the rotor cores;

a plurality of stators having a plurality of stator cores disposed side by side and surroundingly facing the respective rotor cores and having stator windings wound respectively on the stator cores, the stator windings being connected or coupled in series with respect to a power source;

connecting members short-circuiting the conductive members at the air space or non-magnetic core portion disposed between the rotor cores; and phase shifting means for producing phase differences between the voltages induced on the portions of the conductive members which face one of the plurality of stators and the voltages induced on the corresponding portions of the conductive members which face another one of the stators. This invention provides a variable speed controllable induction motor which, as compared with conventional induction motors, is far superior in starting characteristics and in capability of performing an efficient speed control over a wide range.

However, since the induction motor disclosed in the above mentioned application is not provided with both the means to detect a phase difference between the rotating magnetic fields produced around the respective rotor cores and the means to effect the automatic compensation to obtain the most appropriate phase difference value based on the detected phase difference value, it was seen that, if the motor is started under the state in which the phase difference was not properly adjusted to the given load, the starting itself sometimes encountered difficulties and also that it was not necessarily easy to effect the quick and smooth change of a speed after the starting of the motor.

The main object of the present invention is to provide a variable speed controllable induction motor by which stepless speed control over a wide range can be effected easily and smoothly.

A further object of the invention is to provide a variable speed controllable induction motor in which the phase difference to be produced by the operation of a phase shifting means is appropriately and automatically adjusted in accordance with the load on the motor thereby enabling the smooth and quick starting of the motor.

A still further object of the invention is to provide a variable speed controllable induction motor which can reach the desired set speed accurately and quickly.

In accordance with the present invention there is provided a variable speed controllable induction motor comprising:

a unitary rotor having a plurality of rotor cores mounted, with a predetermined space being provided therebetween, on a common axis and having a plurality of rotor conductive members interconnected and respectively mounted on the rotor cores, the rotor conductive members being short-circuited by resistive members at an intermediate position between the rotor cores;

a plurality of stators disposed side by side and surroundingly facing said respective rotor cores of the rotor and having stator windings wound respectively on said stators;

a phase shifting means for producing phase differences between the voltages induced on the portions of the conductive members which face one of the stators and the voltages induced on the corresponding portions of the conductive members which face another one of the stators;

a phase difference detecting means for detecting phase differences between the rotating magnetic fields produced around the rotor cores by the stators through the operation of the phase shifting means;

a revolutions number detecting means for detecting the rotation speed of the rotor from the axle of the rotor or the rotor core; a revolutions number setting means for setting the desired number of revolutions of the rotor;

a control means for outputting as control signals the control value necessary for the phase shifting means calculated based on the detected signals received from the phase shifting means and the revolutions number detecting means and on the desired number of revolutions set through the revolutions number setting means; and

a driving means for operating the phase shifting means based on the control signals received from the control means.

Fig. 1 is a sectional side elevation of the induction motor according to the present invention;

Fig. 2 is a transverse sectional view of the induction motor shown in Fig. 1 and having a driving means and a rotated position detecting means;

Fig. 3 is a wiring diagram where an induction type phase shifter is interposed between the stator windings;

Figs. 4a and 4b are wiring diagrams of the stator windings connected in series and in parallel to the power source lines;

Fig. 5 shows typical torque-speed characteristic curves of the motor according to the present invention;

Fig. 6 shows a block diagram of an arrangement according to the present invention;

Fig. 7 is a transverse sectional view of the induction motor provided with another rotated position detecting means;

Fig. 8 is a transverse sectional view of the induction motor provided with still another rotated position detecting means;

Fig. 9 is a transverse sectional view of the induction motor provided with another driving means and another rotated position detecting means;

Fig. 10 is a wiring diagram of a three-phase induction motor of the driving means to the power source lines; and

Fig. 11 is a block diagram of the control circuit included in the control means.

The embodiments of the present invention are explained hereunder with reference to the accompanying drawings. Although the explanation is made with reference to a three-phase induction motor which can be considered a typical type of multi-phase induction motor, it is to be understood that the present invention can well be embodied in other multi-phase induction motors. As to the types of the rotor, they are not limited to an ordinary squirrel-cage type which is used for explanation in this specification since other types, such a double squirrel-cage type, deep-slot squirrel-cage type or a special squirrel-cage type, can be adopted for the motor of the present invention. When referred to as "conductive members" in this specification, it is meant for squirrel-cage type conductive members disposed in the respective slots of a squirrel-cage type rotor.

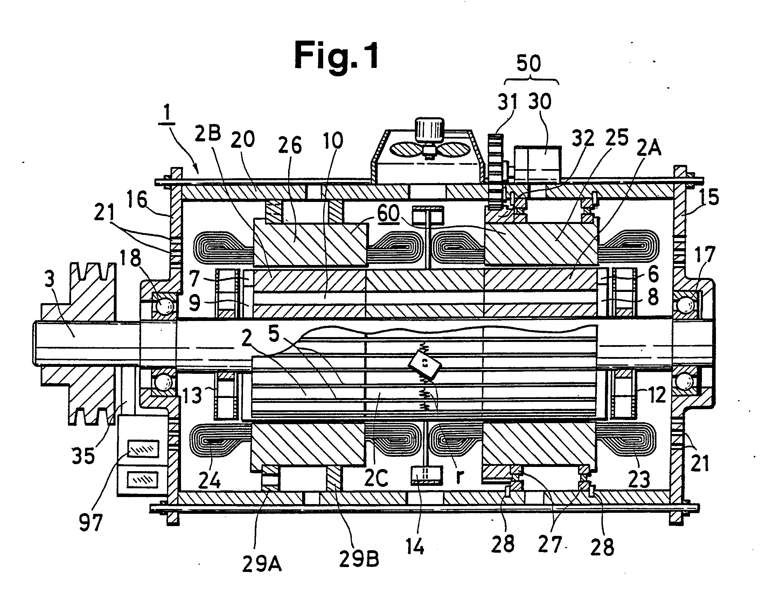

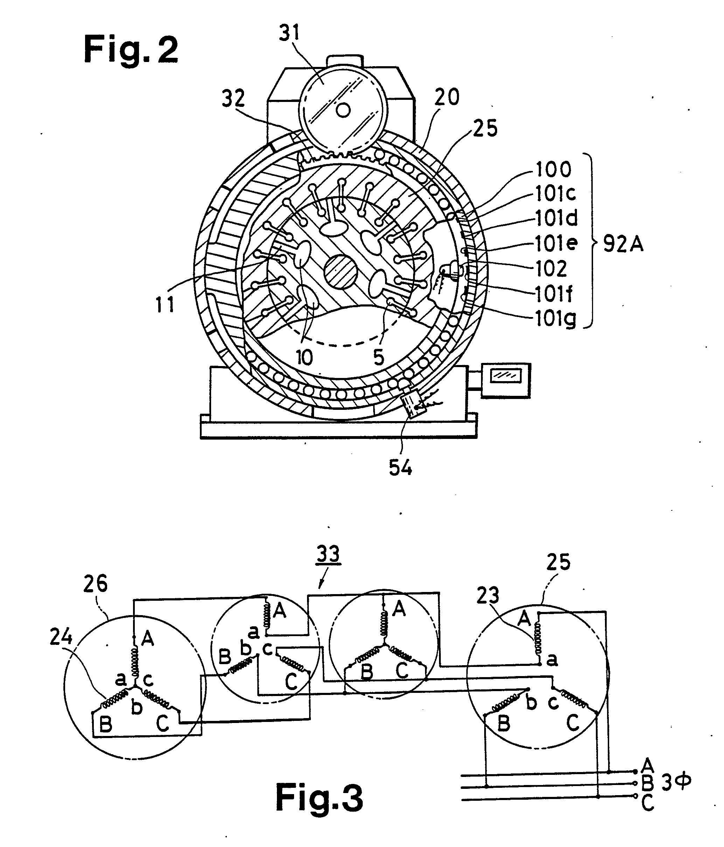

Detailed arrangements concerning one embodiment according to the present invention are explained hereinafter. Fig. 1 shows a cross-sectional view along the axis of the induction motor 1 according to the present invention and Fig. 2 shows a cross-sectional view in the transverse direction thereof. A rotor axle 3 of a rotor 2 carries thereon rotor cores 2A, 2B with a predetermined space therebetween. Between the rotor cores 2A and 2B, there is provided a non-magnetic core portion 2C but, instead of the non-magnetic core, there may be provided simply an air space in smaller type induction motors. In the arrangement illustrated in the drawings, there is provided a non-magnetic core 2C between the rotor cores 2A, 2B. The non-magnetic core 2C may be of heat resisting material, such as asbestos and ceramics (including earthenware, as bricks, and non-magnetic new ceramics). The rotor cores 2A, 2B carry a plurality of rotor conductive members 5... which extend through to both ends of the rotor cores 2A, 2B in a squirrel-cage form, and both ends of the rotor conductive members 5... are interconnected by short-circuit rings 6, 7. The rotor conductive members 5... are interconnected and short-circuited by resistive or connecting members r... at the position of the non-magnetic core 2C between the rotor cores 2A and 2B. The resistive members r may be of high resistivity material such as nichrome wire, steel with carbon content and conductive ceramics. It is not required that all of the rotor conductive members 5... be connected as they may partly, for example, every other of them, be connected. Insulation coating may optionally be applied to the resistive members r....

In the rotor cores 2A, 2B and the non-magnetic core 2C, there are provided a plurality of internal air passages 10 which extend to both ends of the rotor 2 and from which a plurality of radial air passages 11 extend outwardly towards the periphery of the rotor 2 (see Fig. 2). The rotor 2 is provided, at its two ends, with cooling fans 12, 13 which blow air into the internal air passages 10 as the rotor 2 rotates. On the periphery of the non magnetic core 2C, there are provided a plurality of cooling stirrers 14... which are arranged in a blade wheel form and which are made of such non-magnetic material as aluminum, stainless steel, ceramics, resin, rubber and glass. Where the cooling stirrers 14 are made of conductive material, it is desirable that their surfaces be coated with insulating materials.

The rotor 2 formed in one-piece and arranged as explained above is rotatably supported at their both ends by bearings 17, 18 which are carried by bearing bases 15, 16, thereby allowing the rotor 2 to rotate freely within the machine frame 20. The bearing bases 15, 16 are fastened to the machine frame 20 of a cylindrical configuration by means of bolts and nuts. In the bearing bases 15, 16 there are provided a plurality of air passage holes 21.

A first stator 25 having stator windings 23 and a second stator 26 having stator windings 24 are surroundingly facing the rotor cores 2A, 2B respectively, and are disposed side by side on the inner wall of the machine frame 20. As for the first stator 25, since there are provided contact bearings 27, 27 between the machine frame 20 and the first stator 25 and their movement to right and left is restricted by stop rings 28, 28 which are carried in the inner wall of the machine frame 20, the first stator 25 constitutes the rotatable stator. On the other hand, as for the second stator 26, since this is fixed to the machine frame 20 by an air passable fixing ring 29A having an appropriate number of air passing windows and a fixing ring 29B, this second stator 26 constitutes the fixed stator which is neither rotatable nor movable in the axial direction.

A small pulse motor 30 is mounted on the upper outer periphery of the machine frame 20 and a driving gear 31 is fixedly mounted on the output shaft of the motor 30. The driving gear 31 extends into the machine frame 20 through an opening provided therein and engages with a gear 32 which is fixed on one outer side surface of the first stator 25 which is the rotatable stator. The first stator 25 rotates about the common axis of the rotor 2 in response to the operation of a driving mechanism 50 whose main component element is the small pulse motor 30. Due to the relative rotational difference produced with respect to the second stator 26 by the mechanical rotation of the first stator 25, there is produced a phase difference between the rotating magnetic fields generated around the respective rotor cores 2A, 2B. That is, as explained above, the first stator 25 which is the rotatable stator together with the second stator 26 which is the fixed stator constitutes a phase shifting means 60 which is mechanically structured. Control of the amount of mechanical rotation of the first stator 25, that is, control of a phase difference between the rotating magnetic fields produced around the respective rotor cores 2A, 2B, is performed by means of switching the pulse motor 30 in clockwise or counter clock-wise rotations. The driving power source of the driving mechanism 50 is not limited to the pulse motor 30 as any other servomechanism such as pneumatic, hydraulic cylinder systems may well be utilized. The arrangement illustrated in the drawings is one in which one stator, that is, the first stator 25 is relatively rotated with respect to the second stator 26. However, it is possible to so arrange that both the first stator 25 and the second stator 26 rotate in the same direction but with a different rotational speed or that both the stators rotate respectively in the direction opposite from each other.

In the illustrated embodiment, the phase shifting means 60 is a mechanical arrangement as explained above, but, of course, the same may be arranged to be purely electrical by, for example, using a system of switching the connections of the stator windings 23, 24 at the starting or during the operation of the motor or by interposing between the stator windings 23 and stator windings 24 a phase shifter 33 of induction type as exemplified in Fig. 3. It is also possible to use as the phase shifting means a combination of a mechanical arrangement and an electrical arrangement.

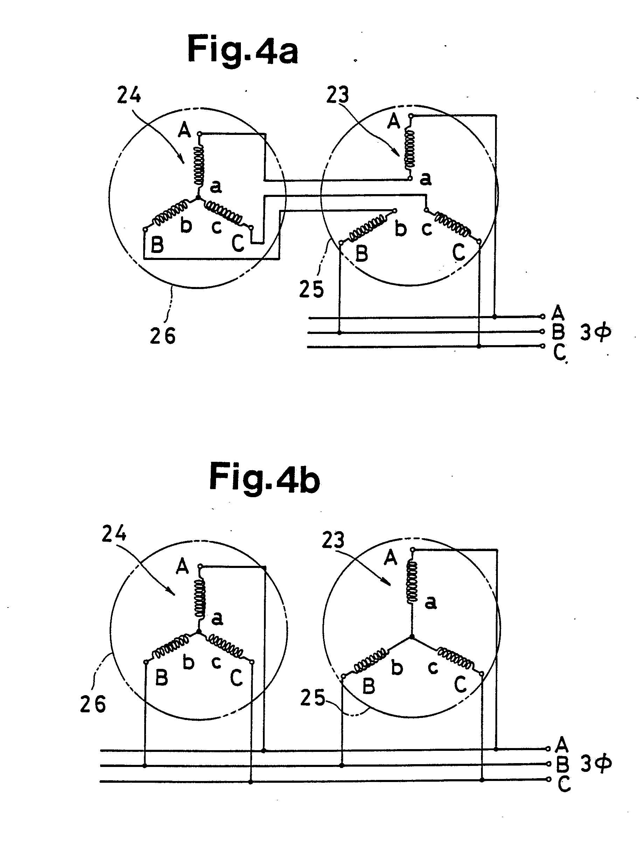

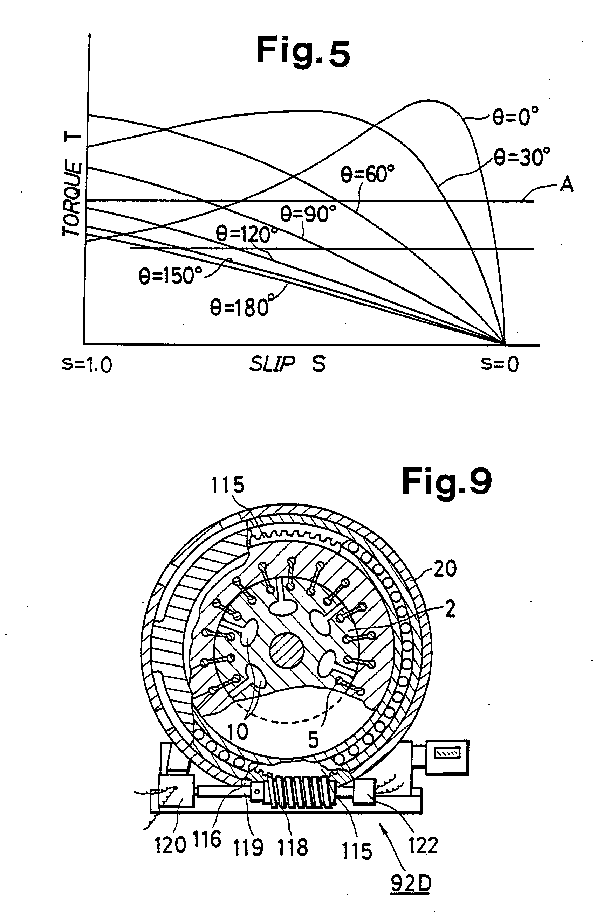

For connecting stator winding 23, 24 wound respectively on the first and second stators 25, 26 to the three-phase power source lines, there are two methods one of which is to connect the windings of the stators respectively in series as shown in Fig. 4a and the other is to connect them simply in parallel as shown in Fig. 4b. The former method is superior in many characteristic respects but the latter may be used in some limited areas of use.. Fig. 5 shows typical torque-speed characteristic curves obtained when the stator windings 23, 24 of the first and second stators 25, 26 are connected to the three-phase power source lines in series as shown in Fig. 4a.

In the torque-speed characteristic curves shown in Fig. 5, if the load represented by the line A is to be applied to the rotor axle 3 of the motor, it is necessary that the phase difference between the rotating magnetic fields be set in the range of 30° - 90° by the operation of the phase shifting means 60. In the conventional motors hereinbefore explained, it was necessary to set or confirm the phase difference by means of manual operation prior to the starting of motors. In the motor according to the present invention, an arrangement for setting and adjusting the phase difference is as explained hereinafter, which is effected quickly and automatically and which makes it possible to start the motor at its best starting torque.

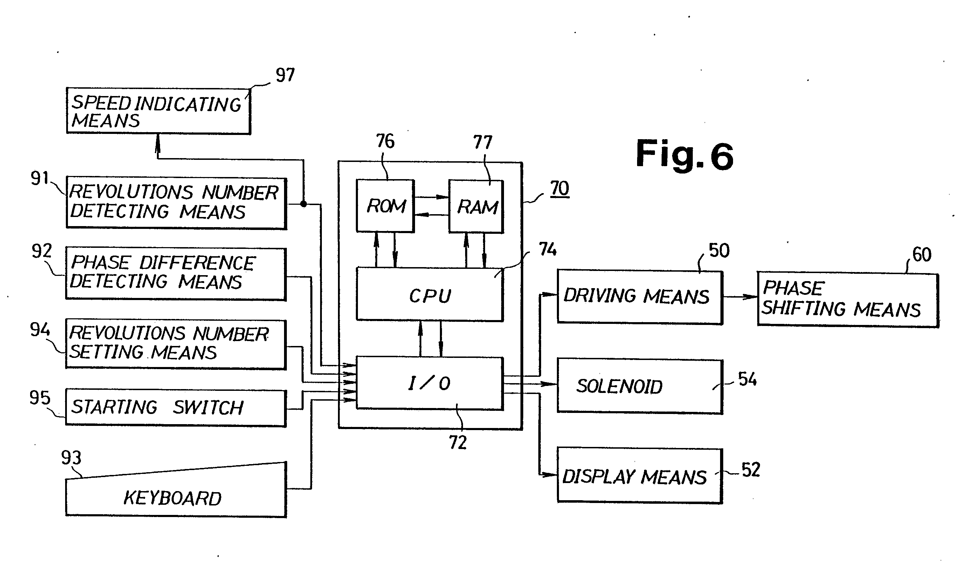

Fig. 6 shows a block diagram of an arrangement according to the present invention. To the input side of a control means 70 are connected a revolutions number detecting means 91 which detects the actual number of revolutions of the rotor 2, a phase difference detecting means 92 which detects a phase difference between the rotating magnetic fields produced between the rotor cores 2A, 2B by the operation of the phase shifting means 60, a keyboard 93, a revolutions number setting means 94 by which the desired final rotation speed is set and a starting switching means 95 which gives starting instructions to the motor. To the output side thereof are connected the driving means 50 which drives the phase shifting means 60, a display means 52 and a solenoid 54 which stops the rotation of the rotatable stator 25 where the phase shifting means 60 is of a mechanical arrangement. The control means 70 comprises an input-output control circuit 72, a central processing circuit 74 and memory circuits 76, 77. The memory circuits 76, 77 of the control means 70 receive, through the keyboard 93, and memorize information relating to the mechanical rotation angle of the rotatable stator 25 with respect to the fixed stator 26 corresponding to the electrical phase difference angle of 0° - 180°, the revolutions number of the rotor 2 corresponding to the electrical phase difference angle of 0-180° and several numbers of set values for starting corresponding to several kinds of loads connected to the rotor axle 3 of the motor. The revolutions number detecting means 91 may be, for example, a tacho-generator 35 connected to the rotor axle 3 as shown in Fig. 1 but it is not limited to this as other non-contact type speed meters such as a strobo-type speed meter or a photo-electric type speed meter may be used in association with the rotor cores 2A, 2B, the non-magnetic core 2C, the rotor conductive member 5..., etc. The actual number of revolutions detected by the revolutions number detecting means 91 is displayed on a speed indicator 97. The phase difference detecting means 92 can be dispensed with, if the phase shifting means 60 is electrically arranged as with a phase shifter 33, since the phase difference produced thereby can be input directly to the control means 70.

Some examples of the phase difference detecting means 92 which is arranged mechanically with the rotatable stator 25 and the fixed stator 26 are explained hereinafter by making reference to the drawings. Where the phase shifting means 60 is of a mechanical arrangement, the phase difference detecting means 92 can be regarded as a rotated position detecting means since the phase difference is proportional to the mechanical rotation difference of the rotatable stator 25 with respect to the fixed stator 26 and the phase difference to be detected can be detected as the mechanical rotation difference.

In Fig. 2, there is shown a first example of the phase difference detecting means 92, that is, a rotated position detecting means 92A. The inner wall of the machine frame 20 carries a non-magnetic plate 100. This non-magnetic plate 100 carries thereon or carries buried therein a plurality of magnetic pieces 101(a-f) the diameters of which are different from one another and which are disposed in order of their diameters. A magnetic sensor 102 for detecting magnetic power is disposed on the outer periphery of the rotatable stator, that is, the first stator 25, so as to be associated with the magnetic pieces 101. The magnetic sensor 102 sends to the control means 70 signals which are of information on differences in the detected amount responsive to the differences in the diameters of the magnetic pieces 101a-101f and which correspond to the relative rotational differences of the first stator 25 with respect to the second stator 26, that is, the phase differences (0°, 30°, 60°, 90°, 120°, 150°, 180°) between the respective rotating magnetic fields produced by the first and the second stators 25, 26 around the rotor 2. Thus, the magnetic sensor 102 together with the magnetic pieces 101a-101f forms the phase difference detecting means, namely, the rotated position detecting means 92A. On the contrary, this may be arranged such that the magnetic sensor 102 be provided on the machine frame 20 and the magnetic pieces 101a-101f be provided on the first stator 25.

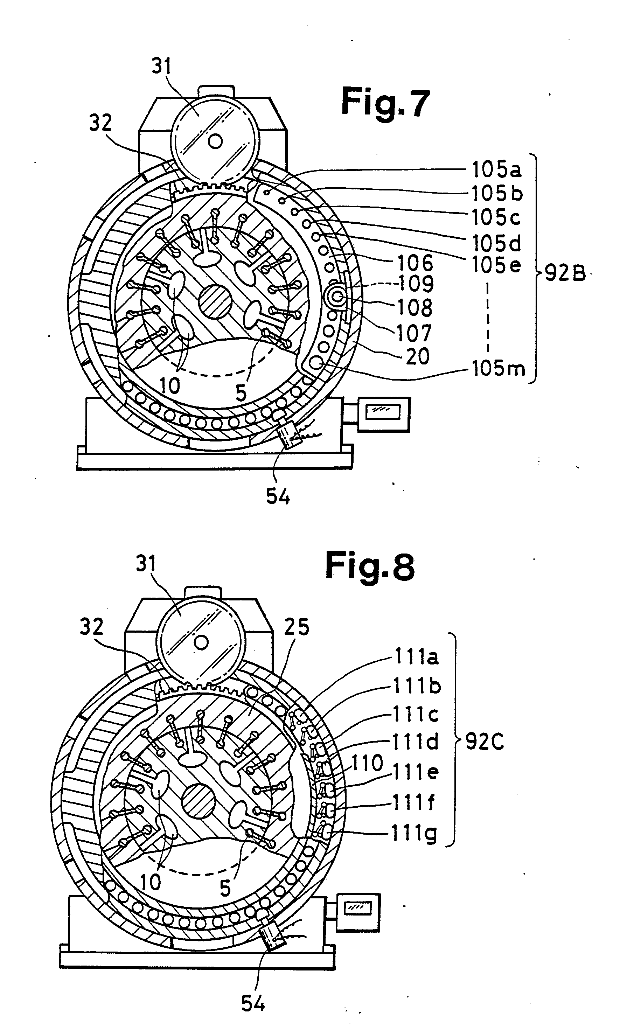

Fig. 7 shows a second example by a rotated position detecting means 92B. In this example, the first stator 25 carries on its end wall an arcuate plate 106 which has a plurality of detection holes 105(a-m) whose diameters are different from one another and the machine frame 20 carries on its inner wall a photo-sensor 108 fixed by a bracket 107 at a position facing the detection holes 105. A light emitting element 109 is located at a position opposite from the photo-sensor 108 and behind the arcuate plate 106. The photo-sensor 108 sends to the control means 70 signals which are of information on differences in the diameters of the detection holes 105 and which correspond to the relative rotational differences of the first stator 25 with respect to the second stator 26, that is, the phase differences between the respective rotating magnetic fields produced around the rotor 2 by the first stator 25 and the second stator 26.

Fig. 8 shows a third example by the phase difference detecting means 92, that is, a rotated position detecting means 92C. In this example, the first stator 25 carries on its peripheral wall a detecting plate 110 of an oblong shape and the machine frame 20 carries on its inner wall a plurality of limiting switches 110(a-g). As the first stator 25 rotates, the movable portions of the limiting switches contact the detecting plate 110 so that the relevant phase differences are detected.

In Figs. 2, 7 and 8, the numeral 54 represents the solenoid which is arranged in the machine frame 20. When the solenoid 54 is energized, the engagement of a projecting member of the solenoid 54 with the gear 32 which is mounted on the first stator 25 is released thereby rendering the first stator 25 to be in a rotatable state. However, under a normal state when the solenoid 54 is not energized, the projecting member of the solenoid 54 is in engagement with the gear 32 thereby maintaining the first stator 25 unrotatable.

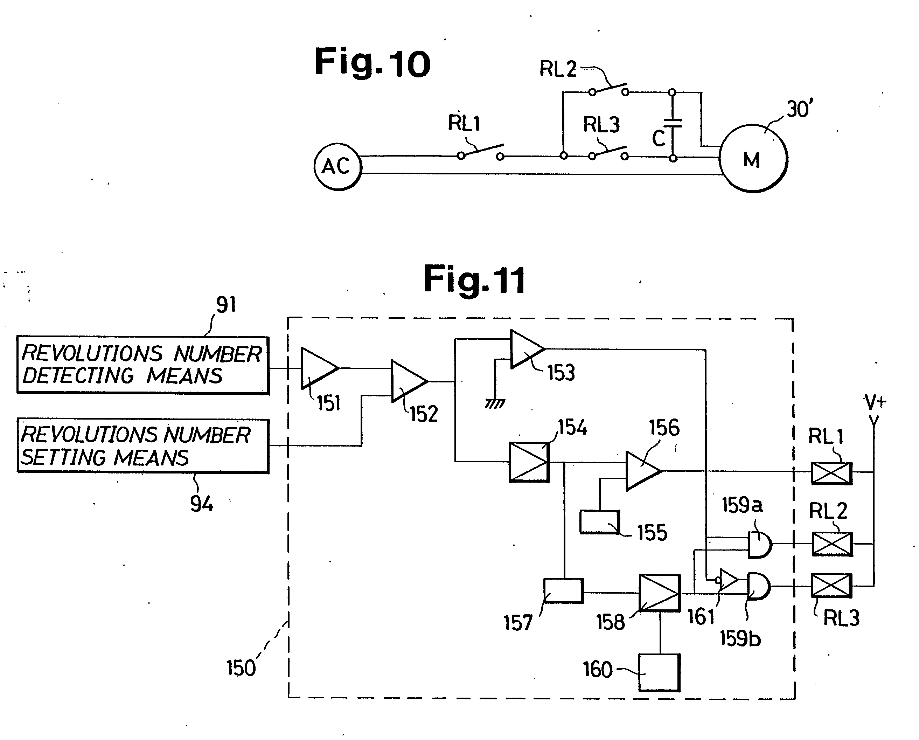

Fig. 9 shows a fourth example by the phase difference detecting means 92, that is, a rotated position detecting means 92D. The first stator 25 carries at its side portion a worm wheel gear 115 which engages a worm gear 118 at and through an opening 116 provided at the bottom portion of the machine frame 20. One end of the axle of the worm gear 118 is connected to the axle of the small pulse motor 120 mounted on the outer wall of the machine frame 20 and the other end thereof is connected to a rotary encoder (potentiometer) 122. The rotary encoder 122 outputs signals corresponding to the rotational difference of the first stator 25 with respect to the second stator 26, which is the phase difference between the respective rotating magnetic fields generated around the rotor 2 by the first and the second stators 25, 26. The arrangement as in this example is superior to the above-explained examples 1 - 3 in that, since the first stator 25 and the pulse motor 120 are connected through the worm wheel gear 115 and the worm gear 118, it does not require any additional or separate means (as the solenoid 54 in the above explained examples 1 - 3) to bring the first stator 25 to the fixed position when the first stator 25 is stopped and that, since the rotary encoder (potentiometer) 122 is employed, the phase differences can be detected steplessly.

Here, an explanation is made of the actual operation of the induction motor according to the present invention in which the rotated position detecting means 92A as shown in Fig. 2 is employed. Upon the instructions for ready to start being input through the keyboard 93, firstly the present rotated position of the rotatable stator 25 is detected by the rotated position detecting means 92A and the detected value is sent to the control means 70 and, at the same time, is displayed on the display means 52. When the set value for starting matching the load characteristics of the load charged to the rotor axle 3 is input to the control means 70 through the keyboard 93, the control means 70 determines based on both the detected value from the rotated position detecting means 92A and the set value for starting as to whether it is necessary to operate the phase shifting means 60. If the determination is that it is necessary to operate, the control means 70 causes the solenoid 54 to be energized so as to allow the rotatable stator 25 to be rotated and, at the same time, causes the pulse motor 30 to rotate the rotatable stator 25 by the necessary amount of rotation. When the rotated position detecting means 92A detects the state in which the rotatable stator 25 has rotated the necessary amount and has reached the desired starting rotated position matching the load characteristics of the charged load, the operation of the pulse motor 30 and the energization of the solenoid 54 automatically are stopped and the display means 52 shows that preparations for starting the motor has completed.

Next, when the desired number of revolutions is input in the control means 70 through the revolutions number setting means 94, the control means 70 calculates the value of the rotational amount of the rotatable stator 25 necessary for the set number of revolutions after the starting of the motor. Here the starting switch 95 is switched on and the motor starts smoothly with the best and most appropriate starting torque meeting the load characteristics of the load. Also, after the starting of the motor, the solenoid 54 is energized and the pulse motor 30 operates on receiving the control signals output from the control means 70 whereby the speed control up to the set number of revolutions is quickly effected. As soon as the revolutions number detecting means 91 detects that the number of revolutions of the rotor 2 has reached the set revolutions number, the operation of the pulse motor 30 and the energization of the solenoid 54 responsive to the control signals from the control means 70 are stopped.

During the operation, when a new desired number of revolutions is input in the control means 70 through the revolutions number setting means 94, the control means 70 calculates the rotation value necessary for bringing from the present position to the rotated position corresponding to the set revolutions number newly input and, based on the calculated value, the pulse motor 30 is rotated in the positive direction or rotated in the reverse direction for effecting the change of a speed. During the sped changing operation, the control means 70 renders the solenoid 54 under the energized state. As soon as the revolutions number detecting means 91 detects that the number of revolutions of the rotor 2 has reached the newly set revolutions number, the operation of the pulse motor 30 and the energization of the solenoid 54 responsive to the control signals from the control means 70 are stopped. Thus, according to the present invention, it is possible to achieve quickly, smoothly and automatically the satisfactory performance of the motor during the period from the starting to the reaching to the desired number of revolutions and the satisfactory speed change to any desired number of revolutions newly set during the operation of the motor.

Now, reference is made to Figs. 10 and 11 which illustrates an example of a control circuit 150 contained in the control means 70 which makes it possible for the number of revolutions of the rotor to reach the set number of revolutions accurately and quickly. By using the control circuit 150, it is possible for the number of revolutions to reach the desired final number of revolutions quickly even when the difference between the set revolutions number and the actual revolutions number is large, to effectively prevent any hunting phenomena and to narrow the range wherein the speed control is not possible.

Fig. 10 shows a wire connection in which a small commercial three-phase induction motor 30' is used as a power source for the driving means 50 and this is connected to the power source in the form of a single-phase operation connection and in the form allowing the reverse rotation of this motor. The relay switch RL1 is closed during the speed changing operation and is opened when the revolutions of the induction motor 1 reaches the desired final revolutions. Relay switches RL2 and RL3 are for determining the direction of the rotation and either one of the switches is selectively closed during the speed changing operation. A capacitor represented by C is a phase advance capacitor for producing rotating magnetic fields at the single phase connection.

Next, an explanation is directed to an example of the control circuit 150 for controlling the operation of a small motor 15 of the driving means 50, which is shown in block diagram in Fig. 11. The numeral 151 represents a convertor which converts the outputs from the revolutions number detecting means 91 into voltages, for example, a convertor formed by a frequency-voltage convertor. The numeral 152 represents a differential amplifier which receives the direct current input voltages from the convertor 151 and the revolutions number setting means 94 and outputs the resulting differential values. The outputs of the differential amplifier 152 are forwarded to a polarity detecting means 153 for determining the direction of rotation of the small motor 30' and are also forwarded to an absolute value amplifier 154 for amplifying the absolute values of the differential values. The outputs of the absolute value amplifier 154 are input in a comparator 156 in which the non-controllable range values is set by a setter 155 as a reference value and are also input in a voltage-pulse convertor 158 through a proportional constant controller (linear controller) 157. The voltage-pulse convertor 158 outputs the input voltages after converting them into pulse signals in response to the output signals sent from a timing signal generator 160. The relay RLI connected to the small motor 30' is opened or closed in accordance with the outputs from the comparator 156. The pulse outputs from the voltage-pulse convertor 158 are applied to one of inputs of each of AND-gates 159a, 159b. To the other input of the AND-gate 159a is applied an output from the polarity detecting device 153 and to the other input of AND-gate 159b is applied an output from the polarity detecting device 153 through an invertor 161 whereby the outputs from the voltage-pulse convertor 158 cause the relay switches RL2 and RL3 to selectively open and close.

Now, how the control circuit 150 is operated is explained. When the induction motor 1 is operated at the revolutions number set by the revolutions number setting means 94, the two input voltages input to the differential amplifier 152 are equal and there is no output from the differential amplifier 152 so that the voltage input to the comparator 156 through the absolute value amplifier 154 is zero. As a consequence, the relay switch RL1 is not closed and the small motor 30′ is not caused to be rotated. On the contrary, when a newly desired number of revolutions different from the present number of revolutions is set by the revolutions number setting device 94 during the operation of the induction motor 1, the differential amplifier 152 outputs a differential value of the two input voltages applied to the differential amplifier 152. The polarity of the differential value, that is, whether the small motor 30′ is to be rotated in the positive direction or the reverse direction, is determined by the polarity detecting device 153. The absolute value of the differential value is input to the comparator 156 after being amplified by the absolute value amplifier 154 so that the comparator 156 closes the relay switch RL1 and the small motor 30′ rotates. The differential value amplified by the absolute value amplifier 154 is applied to a voltage-pulse convertor 158 after its voltage adjustment is made based on the set value of the proportional constant controller 157. The voltage-pulse convertor 158 outputs pulses whose pulse intervals or duty cycles vary depending on the amount of input voltage applied through the proportional constant controller 157 to AND-gates 159a, 159b in response to the signals from the timing signal generator 160. One of the AND-gates 159a, 159b is opened in response to a signal from the polarity detecting device 153 and, thus, the pulse from the voltage-pulse convertor 158 closes selectively either the relay switch RL2 or the relay switch RL3. When the difference between the revolutions number set at the revolutions number setting device 94 and the actual number of revolutions detected by the revolutions number detecting device 91 is large, the voltage applied to the voltage-pulse convertor 158 through the differential amplifier 152, the absolute value amplifier 154 and the proportional constant controller 157 becomes also large so that the pulse outputs therefrom becomes high in frequency in proportion to the input voltage value and large in duty ratio and, thus, the small motor 30′ operates almost continuously. On the contrary, when the difference between the revolutions number set at the revolutions number setting means 94 and the actual number of revolutions detected at the revolutions number detecting device 91 is small, the voltage applied to the voltage-pulse convertor 158 becomes also small so that the pulse outputs therefrom becomes low in frequency in proportion to the input voltage value and small in duty ratio and, thus, the small motor 30′ operates almost intermittently.

Further, even within the range of the intermittent operation, if the difference between the revolutions number set at the revolutions number setting device 94 and the actual number of revolutions detected by the revolutions number detecting device 91 is smaller, the intervals of intermittent operations may be decreased, that is, the time during which the current is supplied to the small motor 30′ may be shortened, so that that the speed control may be enhanced.

In the above example, an arrangement was such that the three-phase induction motor was used as the small motor 30′ for the driving means 50 and that this motor was of a single-phase operation. However, of course, the motor for the driving means is not limited to this and any motor may be selected according to the objects needed to be achieved for speed control or the accuracy required for the motor, such as a DC current motor which is highly efficient in terms of a response speed and a stepping motor or servo motor which may prove to be more efficient than a DC current motor in terms of the possibility of minute rotational movement operation.

## Claims

1. A variable speed controllable induction motor having:
a unitary rotor (2) having a plurality of rotor cores (2A,2B) mounted, with a predetermined space being provided therebetween, on a common axis and having a plurality of rotor conductive members (5) interconnected and respectively mounted on said rotor cores (2A,2B), said rotor conductive members (5) being short-circuited by resistive members (r) at an intermediate position between said rotor cores (2A,2B);
a plurality of stators (25,26) disposed side by side and surroundingly facing said respective rotor cores (2A,2B) of the rotor (2) and having stator windings (23,24) wound respectively on said stators (25,26); and
a phase shifting means (60) for producing phase differences between the voltages induced on the portions of said conductive members (5) which face one of said stators (25,26) and the voltages induced on the corresponding portions of said conductive members (5) which face another one of said stators (25,26), characterized in that said motor further comprising:
a phase difference detecting means (92) for detecting phase differences between the rotating magnetic fields produced around said rotor cores (2A,2B) by said stators (25,26) through the operation of said phase shifting means (60);
a revolutions number detecting means (91) for detecting the rotation speed of said rotor (2) from the axle (3) of said rotor (2) or said rotor core (2A,2B);
a revolutions number setting means (94) for setting the desired number of revolutions of said rotor (2);
a control means (70) for outputting as control signals the control value necessary for said phase shifting means (60) calculated based on the detected signals received from said phase shifting means (60) and said revolutions number detecting means (91) and on the desired number of revolutions set through said revolutions number setting means (94); and
a driving means (50) for operating said phase shifting means (60) based on said control signals received from said control means (70).

2. A variable speed controllable induction motor according to Claim 1 characterized in that said phase shifting means (60) is mechanically arranged with one of said stators (25,26) being a rotatable stator (25) and capable of being rotated with respect to the other fixed stator (26) by the operation of said driving means (50).

3. A variable speed controllable induction motor according to Claim 2 characterized in that said driving means (50) comprises a pulse motor (30) and a gear mechanism (31,32) which cause said rotatable stator (25) to rotate with respect to said fixed stator (26).

4. A variable speed controllable induction motor according to Claim 3 characterized in that said gear mechanism comprises a worm gear (118) whose axle is connected to said pulse motor (120) and a worm wheel gear (115) which is mounted on said rotatable stator (25).

5. A variable speed controllable induction motor according to Claim 2 characterized in that said phase difference detecting means (92) comprises a rotated position detecting means (92A,92B,92C,92D) which directly detects as a phase difference the relative rotation difference of said rotatable stator (25) with respect to said fixed stator (26).

6. A variable speed controllable induction motor according to Claim 5 characterized in that said rotated position detecting means (92A) comprises a plurality of magnetic pieces (101a-101g) having respectively different diameters and a single magnetic sensor (102) or a plurality of magnetic sensors (102).

7. A variable speed controllable induction motor according to Claim 5 characterized in that said rotated position detecting means (92C) comprises a single detection plate (110) and a plurality of limiting switches (111a-111g).

8. A variable speed controllable induction motor according to Claim 5 characterized in that said rotated position detecting means (92B) comprises an arcuate plate (106) having therein a plurality of detection holes (105a-105m) of respectively different diameters, and a light emitting element (109) and a photo sensor (108) interposing said arcuate plate (106) therebetween.

9. A variable speed controllable induction motor according to Claim 4 characterized in that said rotated position detecting means (92D) comprises a rotary encoder (122) connected to the axle (119) of said worm gear (118).

10. A variable speed controllable induction motor according to Claim 1 characterized in that said control means (70) outputs to said driving means (50) a series of control signals which are based on the absolute values of differences between number of revolutions detected by said revolutions number detecting means (91) and the desired number of revolutions set at said revolutions number setting means (94) and which causes said phase shifting means (60) to operate faster while said absolute values are large and to operate slower while said absolute values are small.

11. A variable speed controllable induction motor according to Claim 1 characterized in that said control means (70) outputs to said driving means (50) a series of control signals which are based on the absolute values of differences between the number of revolutions detected by said revolutions number detecting means (91) and the desired number of revolutions set at said revolutions number setting means (94) and which causes said phase shifting means (60) to operate continuously while said absolute values are large and to operate intermittently while said absolute values are small.

# Fig.1

# Fig.2

# Fig.3

# Fig.4a

# Fig.4b

# Fig.5

# Fig.9

**Fig. 6**

EP 0 313 309 A2

## Fig.7

31
32
105a
105b
105c
105d
106
109
108
107
20
105e
105m
92B
10
5
54

## Fig.8

31
32
25
111a
111b
111c
111d
110
111e
111f
111g
92C
10
5
54

# Fig.10

# Fig.11

EP 0 313 309 A2